Europäisches Patentamt

(19) European Patent Office

Office européen des brevets

(11) Publication number: **0 197 151**
**B1**

# EUROPEAN PATENT SPECIFICATION

(45) Date of publication of patent specification: **16.08.89**

(51) Int. Cl.⁴: **A 01 M 3/00**

(21) Application number: **85902677.5**

(22) Date of filing: **10.05.85**

(86) International application number:
**PCT/KR85/00011**

(87) International publication number:
**WO 86/00195 16.01.86 Gazette 86/02**

(54) **FLYCATCHER OF TRANSPARENT SYNTHETIC RESIN.**

(30) Priority: **27.06.84 KR 846081 u**

(43) Date of publication of application:
**15.10.86 Bulletin 86/42**

(45) Publication of the grant of the patent:
**16.08.89 Bulletin 89/33**

(84) Designated Contracting States:
**AT BE CH DE FR GB IT LI LU NL SE**

(56) References cited:
**GB-A- 217 868**
**JP-A-55 058 045**
**JP-U-53 107 575**
**NL-C- 35 954**

(73) Proprietor: **Jason Industries Co., Ltd.**
**282-30, Book ka jwa-dong**
**Seodaemun-ku, Seoul-134 (KP)**

(72) Inventor: **RHEE, Yong Su**
**251-1 Soo Yong 2nd Dong**
**Dohbong-ku Seoul (KR)**

(74) Representative: **Cole, David John**
**Executive Liaison Services 54 Templemere**
**Weybridge Surrey KT13 9PB (GB)**

Courier Press, Leamington Spa, England.

## Description

This invention relates to a transparent flytrap that catches flies or flying insects in a sanitary way and then kills the insect, without using chemical sprays, fly swatters or fly catchers.

GB—A—217 868 describes a flytrap constructed from one or more sheets of material sealed along edges so that the flytrap has an open mouth at one end and is closed at the other, having the form of a cone or a hollow pyramid; the pyramidal form of the flytrap is capable of being collapsed by folding its edges together.

The flytrap of this invention is operated manually to catch flies easily without swatting. It does not require a lot of material in manufacture, and is very effective for use in catching and disposing of flies.

Use of a fly swatter to catch flies is a matter of common knowledge. In particular, fly swatters are constructed using screenlike materials to allow air to pass through them easily. This is done because household flies and other insects are very sensitive to changes in air pressure and must pass through the air to fly away before being struck by the fly swatter; the screenlike material of a fly swatter creates a vacuum during that interval, the air pressure drops, and there is not sufficient time for the fly to escape before being hit by the swatter. The fly swatter is very unsanitary. Dead flies accumulate here and there, wherever the flies fall. When flies land on tableware that will touch food or drink, in a kitchen where food is prepared, or on the surface of a dining table, use of the fly swatter in an unsanitary manner must be avoided, because the fly itself carries germs in its blood or on its body. Chemical sprays are used to catch flying insects, and are most effective when sprayed directly on the insect. However, when the insect is on a kitchen surface, on a dining table, or on a food surface, use of the spray cannot be recommended.

This is because chemical sprays are harmful not only to insects but to humans as well. These kinds of chemical sprays are usually aerosol sprays, but they cannot be used when the fly or flying insect is resting on food or drink, a dining table, or cooking utensil, since noxious insecticide must not be sprayed on food or cooking utensils.

Another well-known method of catching flies is the use of a fly catching device, such as adhesive fly paper, which gives off an odor that attracts flies. Another form of a trap for catching flies is to arrange a wire carrying electricity around a source emitting ultraviolet rays, to inflict a shock on or to burn insects that approach the ultraviolet light. These methods are generally sanitary, but are not especially effective against certain flies. Under these circumstances, special fly paper or ultraviolet light may not be attractive. In particular, it is difficult to use adhesive fly paper more than once, and use of ultraviolet light or electricity is generally expensive and complicated; moreover, because electricity is necessary for the ultraviolet light method, the apparatus is immobile in use.

As a result of research based on the deficiencies of existing flytraps, it was decided to invent a new transparent plastic flytrap that would be superior in terms of practicality and price, in use and in storage.

Accordingly, this invention provides a flytrap which is generally similar to that disclosed in GB—A—217 868 and is constructed from two thin sheets of material sealed to one another along two connected edges so that the flytrap has an openable mouth at one end and is closed at the opposed end. However, the flytrap of the present invention is characterized in that the two sheets of material are of transparent plastic material and are sealed to one another in such a manner that, when no pressure is exerted upon the two edges the two sheets will lie flat against one another, but that when pressure is exerted upon the two edges the two sheets will deform away from one another, so that the flytrap changes shape to form a cone.

Simple Explanations of the Drawings

Drawing 1 is an oblique view of improved transparent plastic flytrap according to the concept.

Drawing 2(A) is an oblique view of this invention when its shape is changed to a cone for use, by exerting a small amount of pressure with the hand on the upper part of the seams on both sides of the device.

Drawing 2(B) is a transparent view of the transparent plastic flytrap which has been shaped by hand into a conical form and placed over the fly to be caught.

Drawing 2(C) is perspective view showing the insect captured inside the cone-shaped transparent plastic flytrap.

Drawing 2(D) is a side view of this invention, showing the insect caught inside the transparent plastic flytrap after the device has been pressed together by hand.

Drawing 2(E) is an oblique view of this invention, showing removal of the insect from the transparent plastic flytrap by pressing the seams on both sides of the trap.

Drawing 2(F) is a frontal view of the two thin sheets on top of one another, isolating the side pressure regions.

The Optimal Configuration for Implementation of the Invention

Device (1) that is the basis for the transparent plastic flytrap is characterized by its construction using two thin sheets of transparent plastic (2) (2'), narrow at top and wide at bottom (trapezoid shape), placed one on top of another, sealed using high frequency heat and pressure on both sides (3) (3') and at top (3''), but not at bottom.

Constructed of the hardest transparent plastic possible, the device is flexible, and its shape can be changed easily. Two thin sheets (2) (2') are placed one on top of another, and both sides (3) (3') and the top (3'') are made adhesive at high frequency; the adhesive portions are then sealed. At the time of sealing, the lower end of the two thin sheets (2) (2') is not high-frequency heat-sealed; thus the lower portion (4) constitutes the mouth.

This invention can also be constructed using adhesive tape on the outside of the sides (3) (3') and top (3'') of the two thin sheets placed one on top of the other (2) (2'). This invention constructed in such a manner can be used as a flytrap as described above. A detailed explanation of its operation and effectiveness follows.

When in storage or when not catching flies, the device is in sheet form, as illustrated in drawing 1 and drawing 2(F). It is therefore extremely simple to store or transport. When it is being used to catch a fly (5) or insect, a small amount of inward pressure is exerted by hand (6) on both seams (3) (3') (which had been high-frequency heat-sealed) to change the device into its second form, a cone shape. The lower end forms a mouth (4) and the mouth (4) is in the shape of a circle. The inside of the device (1) is filled with air. As illustrated in drawing 2(B), if as the spot where the fly (5) is resting is approached, the spot is hit lightly with the mouth (4), the fly enters the mouth (4) and is caught within the empty inner portion of the device (1), as illustrated in drawing 2(C). By removal of hand (6) that had been pressing high-frequency heat-sealed seams (3) (3'), the device (1) returns to its sheet form, as illustrated in drawing 2(D); there is no air pressure, and the fly is captured, unable to escape from the thin sheets on both sides (2) (2').

After killing the fly by exerting a small amount of pressure by fingers on the sheets on both sides of the device, the device is taken to a wastebasket or outside room, and once again the seams (3) (3') of the device are pressed lightly to change its shape into a cone. If the device is held vertically, the dead fly (5) will drop out of the bottom.

By repeating the actions described above, flies (5) or insects can continue to be caught. When the device is to be stored and not in use, it can be returned to sheet form, as illustrated in drawing (G), by removing the hand and pressing lightly on the upper end of the two sheets (2) (2') that form the device.

Thus, this invention of the transparent plastic flytrap is particularly effective in catching flies that are resting or walking about, rather than flies that are flying about. It is effective not only for catching flies, but for catching all insects which cannot see transparent color. When the device is used to catch flies, it is most effective to grasp lightly the upper end of the sides (3) (3') of the two sheets of plastic (2) (2'), which form the basis of this invention (1).

Flies and all insects are shortsighted and have almost no ability to distinguish colorless objects. The flytrap is constructed of transparent plastic material, which takes advantage of this weakness of the insect, and which is easy to manufacture, inexpensive to produce, and which, moreover, allows one to mass produce high quality products.

In addition, when this invention is not catching flies or is not in use, it is in sheet form, as illustrated in drawings 1 and 2. Thus storage and transport are very convenient. Therefore, if the number is kept to a minimum, the weight will be light, and packaging and shipping fees will be inexpensive. Thus this is a practical, useful invention which can be very easily used and handled.

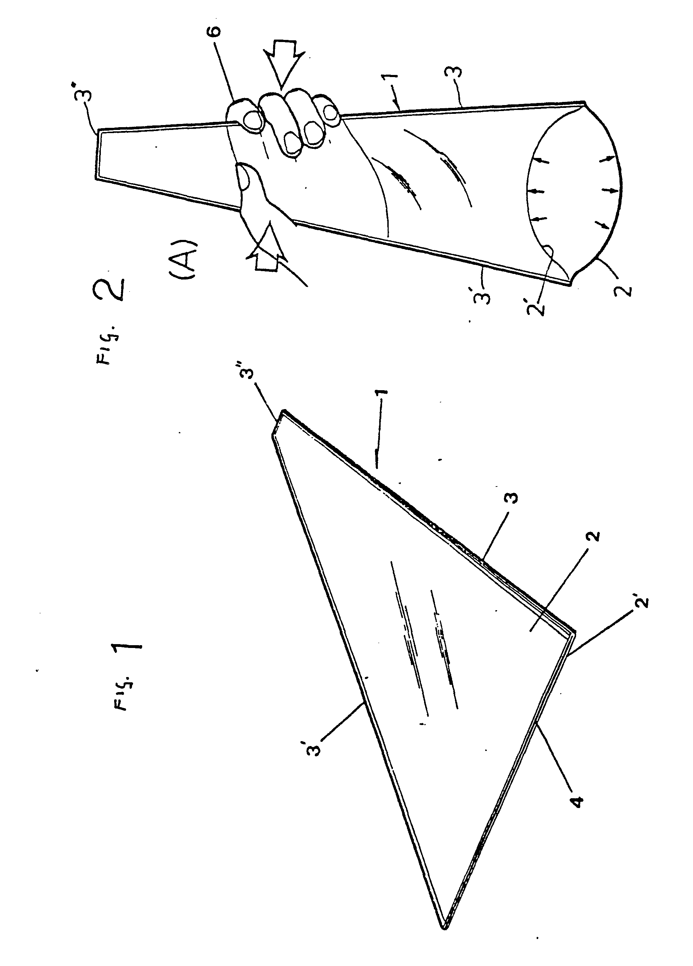

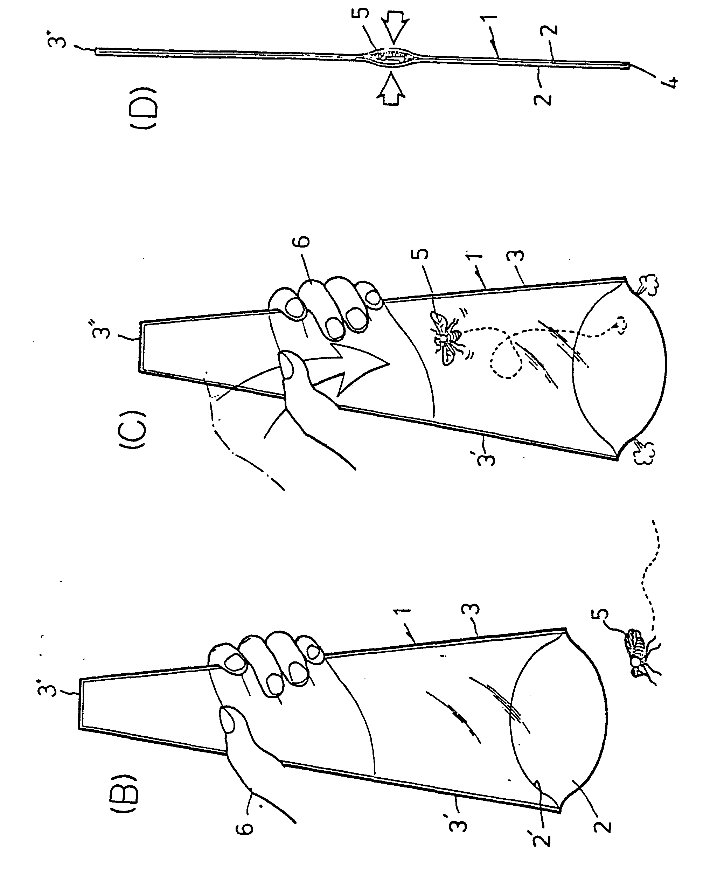

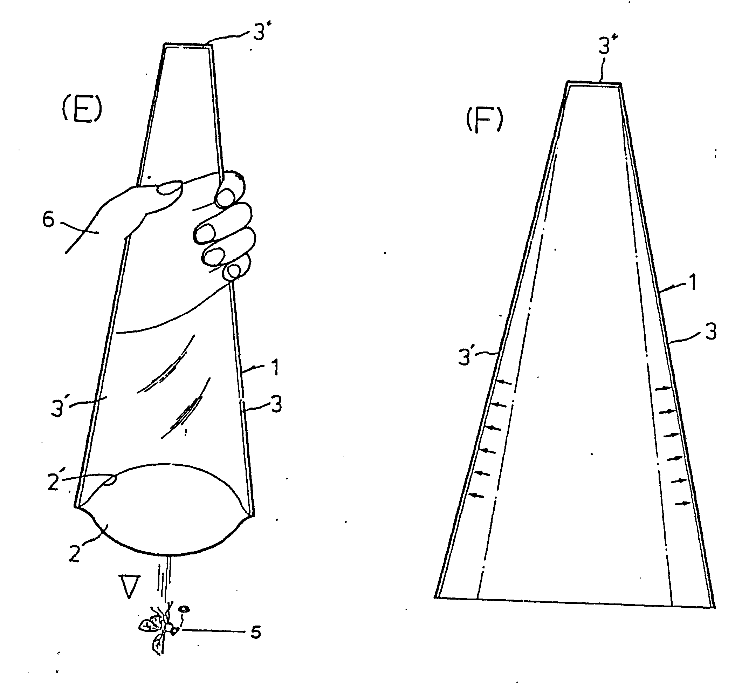

## Claim

A flytrap (1) constructed from two thin sheets of material (2, 2') sealed to one another along two connected edges (3, 3') so that the flytrap (1) has an openable mouth (4) at one end and is closed at the opposed end (3''), characterized in that the two sheets of material (2, 2') are of transparent plastic material and in that these sheets (2, 2') are sealed to one another in such a manner that, when no pressure is exerted upon the two edges (3, 3'), the two sheets (2, 2') will lie flat against one another, but that when pressure is exerted upon the two edges (3, 3'), the two sheets (2, 2') will deform away from one another, so that the flytrap (1) changes shape to form a cone.

## Patentanspruch

Fliegenfänger (1), bestehend aus zwei dünnen Materialstreifen (2, 2'), welche aneinander entlang zwei miteinander verbundenen Kanten (3, 3') abgedichtet sind in der Weise, daß der Fliegenfänger (1) an einem Ende eine zu öffnende Mündung (4) aufweist und am gegenüberliegenden Ende (3'') geschlossen ist, dadurch gekennzeichnet, daß die beiden Materialstreifen (2, 2') aus durchsichtigem Kunstharz bestehen und diese Streifen (2, 2') aneinander in der Weise abgedichtet sind, daß ohne Ausübung eines Druckes auf die beiden Kanten (3, 3') die beiden Streifen (2, 2') flach aneinanderliegen, daß aber bei Druckausübung auf die beiden Kanten (3, 3') sich die beiden Streifen (2, 2') unter Bildung eines Abstandes voneinander deformieren, so daß der Fliegenfänger (1) seine Gestalt ändert, um einen Kegel zu bilden.

## Revendication

Attrape-mouches (1) réalisé à partir de deux feuilles minces de matière (2, 2') scellées l'une à l'autre le long de deux bords reliés (3, 3') de sorte que l'attrape-mouches (1) présente une embouchure ouvrable (4) à une extrémité et est fermé à l'extrémité opposée (3''), caractérisé en ce que les deux feuilles de matière (2, 2') sont en une matière plastique transparente et en ce que ces feuilles (2, 2') sont scellées l'une à l'autre de façon que, quand aucune pression n'est exercée sur les deux bords (3, 3'), les deux feuilles (2, 2') sont à plat l'une contre l'autre, mais que, quand une pression est exercée sur les deux bords (3, 3'), les deux feuilles (2, 2') se déforment en s'écartant l'une de l'autre, de sorte que l'attrape-mouches (1) change de forme pour former un cône.

FIG. 1

FIG. 2

(A)

EP 0 197 151 B1

(B)

(C)

(D)

(E)

(F)